(19) Europäisches Patentamt
European Patent Office
Office européen des brevets

(11) EP 2 204 389 B1

(12) **EUROPEAN PATENT SPECIFICATION**

(45) Date of publication and mention of the grant of the patent:
**17.09.2014 Bulletin 2014/38**

(21) Application number: **09178672.3**

(22) Date of filing: **10.12.2009**

(51) Int Cl.:
***C08F 20/18*** *(2006.01)* ***C08F 22/12*** *(2006.01)*
***C08F 120/18*** *(2006.01)* ***C08F 122/10*** *(2006.01)*
***C08F 220/18*** *(2006.01)* ***C08F 222/12*** *(2006.01)*
***C08F 18/16*** *(2006.01)* ***C08F 118/16*** *(2006.01)*
***C08F 218/16*** *(2006.01)* ***C10M 145/16*** *(2006.01)*

(54) **Power transmission fluids with improved viscometric properties**

Leistungsübertragungsflüssigkeiten mit verbesserten viskometrischen Eigenschaften

Liquides de transmission de puissance dotés de propriétés viscométriques améliorées

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **23.12.2008 US 342666**

(43) Date of publication of application:
**07.07.2010 Bulletin 2010/27**

(73) Proprietor: **Infineum International Limited**
**Abingdon,**
**Oxfordshire OX13 6BB (GB)**

(72) Inventors:
- **Clarke, Dean B.**
  **Linden, NJ 07036 (US)**
- **Waterson, Carl**
  **Linden, NJ 07036 (US)**
- **Bloch, Richard A.**
  **Linden, NJ 07036 (US)**
- **Martella, David J.**
  **Linden, NJ 07036 (US)**

(74) Representative: **Goddard, Frances Anna et al**
**PO Box 1**
**Milton Hill**
**Abingdon, Oxfordshire OX13 6BB (GB)**

(56) References cited:
**EP-A1- 0 937 769** **WO-A1-89/01507**
**AU-B2- 605 594** **US-A- 5 256 752**
**US-A1- 2005 287 257**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### FIELD OF THE INVENTION

The present invention relates to novel copolymers which can be used in power transmission fluids to provide improved viscometric properties.

### BACKGROUND OF THE INVENTION

Various vehicular power transmission systems such as automatic transmissions, manual transmissions, continuously variable transmissions, etc. are well known in the art. New power transmission systems are constantly being designed and conventional power transmission systems are continuously being re-designed to provide improved vehicle operability, reliability, and fuel economy.

Typically, a new or re-designed power transmission system requires a specially formulated power transmission fluid in order to meet its performance specifications. The fluids must meet standards set by the vehicle manufacturers. For example, General Motors introduced a Dexron-VI specification for automatic transmission fluids in 2006 model year cars and trucks equipped with Hydra-Matic transmissions. The Dexron-VI specification ratchets up performance demands to accommodate transmission design changes as well as pushes by automakers for fluids to last longer and perform better. The Dexron-VI specification requires power transmission fluids to exhibit a fluid viscosity at -40°C of less than or equal to 15,000 centipoise (cP).

In order to provide power transmission fluids that are capable of exhibiting the requisite performance requirements, one or more of the following additive components must be mixed in specific proportions with a base oil: viscosity modifiers, lube oil flow improvers ("LOFIs"), friction modifiers, dispersants, metallic detergents, antiwear agents, viscosity modifiers (VM), etc. Generally speaking, these types of components are well known in the art, but the specific chemical compositions of the various components are continually being invented.

The present invention provides a novel copolymer possessing characteristics of both a LOFI and a VM which can be used in power transmission fluids to provide improved viscometric properties. The copolymer comprises a mixture of alcohols having an average number of carbon atoms in their side chains ranging from greater than 8 to less than 12 calculated using a specific equation. The copolymer can exhibit a thickening efficiency ("TE") ranging from 0.10 to 1.00.

### SUMMARY OF THE INVENTION

According to a first aspect, the present invention provides a power transmission fluid composition comprising:

(a) a base oil comprising a Group II base stock, a Group III base stock and/or a Group IV base stock as well as mixtures thereof; and

(b) a copolymer obtainable by polymerising a dicarboxylic acid ester monomer represented by the general formulas:

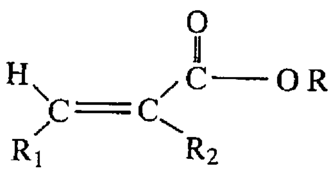

**Formula 1**

wherein R is a $C_6$ to $C_{18}$ straight chain alkyl group, $R_1$ is COOR, and $R_2$ is hydrogen or a $C_1$ to $C_4$ alkyl group, or

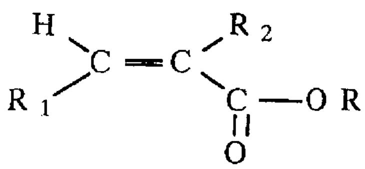

**Formula 2**

wherein R is a $C_6$ to $C_{18}$ straight chain alkyl group, $R_1$ is COOR, and $R_2$ is hydrogen or a $C_1$ to $C_4$ alkyl group, wherein the straight chain alkyl group R in a compound of Formulas 1 and 2 is obtainable by reaction of the corresponding acid precursor of a compound of Formula 1 or 2, where R is H in a compound of Formulas 1 and 2 and $R_1$ and $R_2$ are as defined in a compound of Formulas 1 and 2, and a mixture of alcohols having side chains with an average number of carbons ranging from greater than 8 to less than 12 defined by the following formula:

$$C_n = \frac{\sum_{i=j}^{i=z} X_i Cn_i}{\sum_{i=j}^{i=z} X_i}$$

where $X_i$ is the mole fraction of alcohol (*i*); $C_{ni}$ represents the number of carbon atoms in alcohol (*i*); j is the lowest number of carbons in an alcohol in the copolymer and must be at least 6; and z is the highest number of carbons in an alcohol.

DETAILED DESCRIPTION OF THE INVENTION

Various terms are used throughout this specification. Definitions for some of these terms are provided below.

The term "base stock" is defined in accordance with the definition provided in the American Petroleum Institute (API) publication "Engine Oil Licensing and Certification System", Industry Services Department, Fourteenth Edition, December 1996, Addendum 1, December 1998. A base stock is classified as Group I, Group II, Group III, Group IV or Group V depending on the criteria specified below measured using the specified test.

A Group I base stock contains less than 90 percent saturates and/or greater than 0.03 percent sulfur and has a viscosity index greater than or equal to 80 and less than 120.
A Group II base stock contains greater than or equal to 90 percent saturates and less than or equal to 0.03 percent sulfur and has a viscosity index greater than or equal to 80 and less than 120.
A Group III base stock contains greater than or equal to 90 percent saturates and less than or equal to 0.03 percent sulfur and has a viscosity index greater than or equal to 120
A Group IV base stock is a polyalphaolefin (PAO) which is a synthetic base stock.
A Group V base stock encompasses all other base stocks which cannot be classified as a Group I, II, III, or IV base stock.

The term "Thickening Efficiency" (TE) describes a polymer's ability to thicken oil per unit mass and is defined as:

$$TE = \frac{2}{c\ln 2}\ln\left(\frac{Kv_{oil+polymer}}{Kv_{oil}}\right)$$

wherein c is polymer concentration (grams of polymer/100 grams solution), $kv_{oil+polymer}$ is kinematic viscosity of the polymer in the reference oil, and $kv_{oil}$ is kinematic viscosity of the reference oil.

The term "molecular weight" ($M_w$) refers to the weight average molecular weight. The $M_w$ values herein were determined using gel permeation chromatography based on polystyrene calibration.

The copolymer comprises a mixture of alcohols having side chains with an average number of carbon atoms ($C_n$) ranging from greater than 8 to less than 12 defined by the following formula:

$$C_n = \frac{\sum_{i=j}^{i=z} X_i Cn_i}{\sum_{i=j}^{i=z} X_i}$$

where $X_i$ is the mole fraction of alcohol ($i$); $C_{ni}$ represents the number of carbon atoms in alcohol ($i$); j is the lowest number of carbons in an alcohol in the copolymer and must be at least 6; and z is the highest number of carbons in an alcohol.

The following provides an example of how $C_n$ is calculated. Assume we have a copolymer comprising a mixture of the following alcohols: 0.2 mole fraction of an alcohol with a four (4) carbon side chain; 0.2 mole fraction of an alcohol with an eight (8) carbon side chain; 0.3 mole fraction of an alcohol with a ten (10) carbon side chain; and 0.3 mole fraction of an alcohol with a twelve (12) carbon side chain. The copolymer has a mixture of alcohols whereby the average number of carbon atoms of the alcohol side chains equals (0.2*8 + 0.3*10 +0.3*12) / (0.2 + 0.3 + 0.3) = 10.25. Notice the alcohol having less than six carbon atoms in its side chain, like the 0.2 mole fraction of an alcohol with a four (4) carbon side chain, was not included in the calculation.

The average number of carbon atoms in the side chains for the various alcohols that make up the copolymer is important because it determines the crystallization temperature of the copolymer. The crystallization temperature of the copolymer affects how the copolymer interacts with wax in the lubricant composition.

The copolymer can comprise various monomers.

In another non-limiting embodiment of the invention, the copolymer comprises a fumarate-vinyl acetate ("FVA") copolymer. The FVA copolymer can be prepared from dicarboxylic acid esters as is well known in the art. Other suitable dicarboxylic acid esters can be represented by the general formulas:

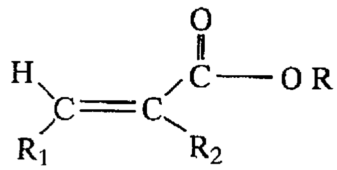

**Formula 1**

wherein R is a $C_6$ to $C_{18}$ straight chain alkyl group, $R_1$ is COOR, and $R_2$ is hydrogen or a $C_1$ to $C_4$ alkyl group, e.g., methyl, or

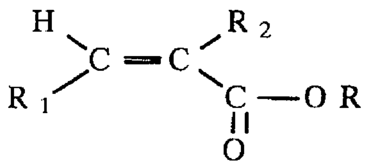

**Formula 2**

wherein R is a $C_6$ to $C_{18}$ straight chain alkyl group, $R_1$ is COOR, and $R_2$ is hydrogen or a $C_1$ to $C_4$ alkyl group, e.g., methyl.

Examples of the abovementioned dicarboxylic acid esters include fumarate and maleate esters such as didecyl fumarate, decyl-lauryl fumarate, dilauryl fumarate, lauryl-hexadecyl fumarate, lauryl maleate, etc.

In this embodiment of the invention, the FVA polymer can contain from 40 to 60 mole percent of fumarate and from 60 to 40 mole percent of vinyl acetate. The dialkyl fumarate can have from 50 to 100 wt. % of its alkyl groups ranging from $C_6$ to $C_{24}$.

In yet another embodiment of the invention, the copolymer comprises maleate vinyl acetate ("MVA") copolymer. In another embodiment of the invention, the copolymer comprises a combination of FVA copolymer and MVA copolymer.

The copolymer can be formed by various methods which are well known in the art. By way of example, in an embodiment of the invention, the copolymer is formed by free-radical polymerization of a dicarboxylic ester containing 0.5 mole fraction of an alcohol having ten (10) carbon atoms and 0.5 mole fraction of an alcohol having twelve (12) carbon atoms.

In another embodiment of the invention, the copolymer is formed by polymerizing dialkyl fumarate (DAF) and vinyl acetate (VA) as is well known in the art.

In an embodiment of the invention, the copolymer exhibits a thickening efficiency ("TE") ranging from 0.10 to 1.00.

The descriptions of the copolymer above encompass various "spacer" monomers added to the backbone of the copolymer for the purpose of extending the chain length per mass and increasing the thickening efficiency of the copolymer. Suitable spacer monomers include, but are not limited to, maleic or fumaric esters having side chain alcohols with less than six (6) carbons or alpha olefins with less than eight (8) carbon atoms (e.g., 1-octene with two carbon atoms in the backbone).

In an embodiment of the invention, the spacer monomer is an olefin defined by the following formula:

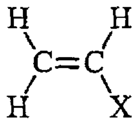

where X is hydrogen; a linear or branched alkyl group, e.g., methyl, ethyl, 1-propyl, 2-propyl, 1-butyl, 2-butyl, 1-pentyl, 1-hexyl; a halogen, e.g., chloride, bromide; or an alkyl ether, e.g., methoxyl, ethoxyl.

In various embodiments of the invention, other polymers can be mixed with the copolymer to provide improved thickening efficiency. For example, an olefin copolymer can be mixed with the copolymer of the invention. As another example, a polyisoprene-containing polymer can be mixed with the copolymer of the invention.

In certain instances, it may be beneficial to modify the copolymer so it has dispersant like properties (i.e., the copolymer has polarity to function as a dispersant). Thus, in an embodiment of the invention, the copolymer contains nitrogen species such as N-vinylimidazole, N-phenyl-1-phenylenediamine, vinyl pyridine, etc.

The copolymer containing nitrogen species can be formed by various methods which are well known in the art. For example, the copolymer can be copolymerized with a nitrogen containing monomer such as, but not limited to, an amide formed by reacting methacrylic acid and dimethylaminopropylamine. As another example, the copolymer can be grafted with a nitrogen-containing grafting agent such as, but not limited to, N-vinylimidazole.

The present invention encompasses a power transmission fluid comprising (a) a base oil and (b) at least one copolymer as described above.

The base oil comprises a Group II base stock, a Group III base stock and/or a Group IV base stock as well as mixtures thereof.

In an embodiment of the invention, the base oil comprises up to 5% of a Group I base stock.

In another embodiment of the invention, the base oil comprises a Group II base stock. An example of a suitable Group II base stock is Yubase 3 which is commercially available from Yukong Limited Corporation (South Korea).

In another embodiment of the invention, the base oil comprises a Group III base stock. Examples of suitable Group III base stocks are Yubase 4 and Yubase 6 which are commercially available from Yukong Limited Corporation (South Korea).

In an embodiment of the invention, the base oil has a viscosity of less than 4.7 centistokes, for example from 3.5 to 4.7 centistokes. In another non-limiting embodiment of the invention, the base oil has a NOACK value ranging from 15 to 35 percent. NOACK values indicate the volatility of an oil and are determined according to ASTM D 5800.

According to the present invention, the power transmission fluid can comprise one or more of the following components which are well known in the art: metallic detergents, viscosity modifiers, oxidation inhibitors, friction modifiers, antifoamants, antiwear agents, etc.

In an embodiment of the invention, the power transmission fluid comprises one or more friction modifiers. Suitable friction modifiers include, but are not limited to, glyceryl monoesters of higher fatty acids, for example, glyceryl mono-oleate; esters of long chain polycarboxylic acids with diols, for example, the butane diol ester of a dimerized unsaturated fatty acid; oxazoline compounds; and alkoxylated alkylsubstituted mono-amines, diamines and alkyl ether amines, for example, ethoxylated tallow amine and ethoxylated tallow ether amine. Suitable friction modifiers are described in more detail in U.S. Patent Number 7,300,910.

In an embodiment of the invention, the power transmission fluid comprises one or more metallic detergents. Suitable metallic detergents include oil-soluble neutral and overbased sulfonates, phenates, sulfurized phenates, thiophosphonates, salicylates, and naphthenates and other oil-soluble carboxylates of a metal. Suitable metallic detergents are described in more detail in U.S. Patent Number 7,300,910 .

In an embodiment of the invention, the power transmission fluid includes antiwear agents such as dihydrocarbyl dithiophosphate metal salts. The metal can be an alkali or alkaline earth metal, or aluminum, lead, tin, molybdenum, manganese, nickel or copper. Suitable antiwear agents are described in more detail in U.S. Patent Number 7,300,910 .

In an embodiment of the invention, the power transmission fluid comprises oxidation inhibitors. Examples of suitable oxidation inhibitors include, but are not limited to, hindered phenols, alkaline earth metal salts of alkylphenolthioesters, calcium nonylphenol sulfide, oil soluble phenates and sulfurized phenates, phosphosulfurized or sulfurized hydrocarbons, phosphorous esters, metal thiocarbamates, oil soluble copper compounds and molybdenum-containing compounds. Suitable oxidation inhibitors are described in more detail in U.S. Patent Number 7,300,910.

In an embodiment of the invention, the power transmission fluid comprises one or more viscosity modifiers. Examples of suitable viscosity modifiers include polyisobutylene, copolymers of ethylene and propylene, polymethacrylates, methacrylate copolymers, copolymers of an unsaturated dicarboxylic acid and a vinyl compound, interpolymers of styrene and acrylic esters, and partially hydrogenated copolymers of styrene/isoprene, styrene/butadiene, and isoprene/butadiene, as well as the partially hydrogenated homopolymers of butadiene and isoprene.

In an embodiment of the invention, the power transmission fluid comprises one or more antifoamants. Suitable

antifoamants include, but are not limited to, polysiloxanes such as silicone oil or polydimethyl siloxane.

The power transmission fluids according to the present invention exhibit improved (i.e., lower viscosities at lower temperatures) viscometric properties. For example, the power transmission fluids according to the present invention can satisfy the requirement of a Brookfield viscosity at -40°C of less than or equal to 20,000 cP, or of less than or equal to 15,000 cP.

Examples

The present invention is illustrated by the following examples.

The copolymer was formed in the following manner. First, a $C_{10}$-$C_{12}$ fumarate monomer was synthesized. The reactants shown in Table 1 were combined in a 2 litre RB flask assembled for Dean and Stark esterification. The reactants were heated with stirring to 130°C for 9 hours.

The flask was allowed to cool and the solution was washed with two (2), 500 mL portions of 5% NaOH (aq) solution followed by a washing with three (3) 500 mL portions of distilled water. A toluene layer formed. The toluene layer was dried with anhydrous $MgSO_4$, filtered and rotary evaporated at 100° °C/0 mbar for 90 minutes. The steps described above yielded 821.20g of fumarate monomer.

**Table 1. Reactants for the Synthesis of the $C_{10}$-$C_{12}$ Fumarate Monomer**

| Component | Amount [g] |
|---|---|
| Analar Toluene[1] | 500 |
| Decyl Alcohol[2] | 316.56 |
| Dodecyl Alcohol[2] | 372.68 |
| Fumaric Acid[2] | 232.14 |
| p-Toluene Sulphonic Acid[2] | 23.1 |

[1]Analar Toluene is commercially available from BDH Chemicals Ltd. (Poole, England).
[2]decyl Alcohol, Dodecyl Alcohol, Fumaric Acid and p-Toluene Sulphonic Acid are all commercially available from Sigma-Aldrich Co. (St. Louis, MO).

Next, a $C_{10}$-$C_{12}$ fumarate-vinyl acetate copolymer was synthesized from the monomer. The fumarate monomer prepared above was charged into an autoclave reactor. The contents of the reactor were heated to 60°C to melt the fumarate monomer, and the reactor was then purged with nitrogen to remove oxygen. Next, 22.85g of degassed vinyl acetate and 32.05g of cyclohexane were added to the reactor. The autoclave was sealed, heated to 117°C, and the pressure was adjusted to 4.2 bar using nitrogen.

After the reactor was allowed to stabilize, an initiator solution comprising 5.78 weight percent of t-butyl peroxy perpivalate in cyclohexane was added to the autoclave using a standard high performance liquid chromatograph pump at a constant rate over 110 minute period. The contents in the reactor were allowed to sit for 15 minutes and then emptied into a 500mL, round bottom flask. The resulting solution was stripped on a rotary evaporator for 90 minutes at 100°C at 20mbar vacuum. The steps above yielded 146.33g of copolymer.

Several analytical tests were performed on the copolymer. The specific viscosity of the copolymer was measured at 2 weight percent per volume percent in toluene at 40°C. The measured specific viscosity was 0.23. The Mw of the copolymer was measured using Gel Permeation Chromatography (GPC). The measured Mw was about 30,000 Daltons.

In order to measure the performance properties of a power transmission according to the present invention, the copolymer was blended into DEXRON VI-type power transmission fluids using techniques which are well known in the art. The "adpack" in the fluid contains conventional amounts of succinimide dispersant, antioxidants, antiwear agents, friction modifiers, corrosion inhibitor, antifoamant and diluent oil. The compositions of Examples 1-5 are shown in Table 2.

**Table 2. Compositions of Power Transmission Fluids formulated with the Copolymer of the Invention**

| Components | Ex. 1 [mass%] | Ex. 2 [mass%] | Ex. 3 [mass%] | Ex. 4 [mass%] | Ex. 5 [mass%] |
|---|---|---|---|---|---|
| Avg. number of carbons atoms in the side chains of the alcohols in the copolymer | 8 | 11 | 11 | 11 | 12 |

(continued)

| Components | Ex. 1 [mass%] | Ex. 2 [mass%] | Ex. 3 [mass%] | Ex. 4 [mass%] | Ex. 5 [mass%] |
|---|---|---|---|---|---|
| Adpack | 8.000 | 8.000 | 8.000 | 8.000 | 8.000 |
| Yubase 6 | 49.468 | 49.022 | 49.709 | 49.709 | 49.201 |
| Yubase 3 | 40.542 | 40.177 | 40.739 | 40.739 | 40.325 |
| C10-C12 FVA | 0.000 | 2.551 | 0.000 | 0.000 | 0.000 |
| C11 FVA with 40% of the FVA replaced with maleate | 0.000 | 0.000 | 1.052 | 1.052 | 0.000 |
| C8 FVA | 1.740 | 0.000 | 0.000 | 0.000 | 0.000 |
| C12 FVA | 0.000 | 0.000 | 0.000 | 0.000 | 2.224 |
| Infineum V385* | 0.250 | 0.250 | 0.500 | 0.000 | 0.250 |
| Viscoplex 1-300* | 0.000 | 0.000 | 0.000 | 0.500 | 0.000 |
| *Infineum V385 and Viscoplex 1-300 are both commercially available pour point depressants from Infineum USA L.P. and RohMax Oil Additives respectively. | | | | | |

Various performance properties of the power transmission fluids of Examples 1-5 were measured. KV100 and KV40 were measured according to ASTM D 445. The viscosity index was measured according to ASTM D 2270. The Brookfield Viscosity at -40°C was measured according to ASTM D 2983.

The performance properties of the exemplary power transmission fluids are summarized in Table 3 below.

**Table 3. Performance Properties of the Exemplary Power Transmission Fluids**

| Performance Property | Ex. 1 | Ex. 2 | Ex. 3 | Ex. 4 | Ex. 5 |
|---|---|---|---|---|---|
| TE in Yubase | 0.186 | 0.144 | 0.430 | 0.430 | 0.186 |
| Kv100 (cSt) | 6.1 | 5.9 | 6.1 | 6.2 | 5.9 |
| Kv40 (cSt) | 30.6 | 29.8 | 29.4 | 30.0 | 29.7 |
| Viscosity Index | 150 | 147 | 158 | 1.61 | 148 |
| Brookfield Viscosity at -40 C (cP) | 33,600 | 13,900 | 16,600 | 12,700 | 88,200 |
| NOACK (mass%) | 22.2 | 22.2 | 22.2 | 22.2 | 22.2 |

## Conclusions

Examples 2, 3 and 4 are illustrative of power transmission fluids according to the present invention. Examples 2 and 4 contain a copolymer comprising alcohols having an average of eleven (11) carbon atoms. Example 3 also contains a copolymer comprising alcohols having an average of eleven (11) carbon atoms and contains a dimethyl maleate spacer. Examples 2, 3 and 4 all exhibit a Brookfield Viscosity at - 40°C less than 20,000 cP.

Examples 1 and 5 are illustrative of power transmission fluids which fall outside the present invention. Example 1 contains a copolymer comprising alcohols having an average of eight (8) carbon atoms in its side chains. Example 5 contains a copolymer comprising alcohols having an average of twelve (12) carbon atoms in its side chains. Examples 1 and 5 exhibit a Brookfield Viscosity at -40°C greater than 30,000 cP.

## Claims

**1.** A power transmission fluid composition comprising:

(a) a base oil comprising a Group II base stock, a Group III base stock and/or a Group IV base stock as well as mixtures thereof; and

(b) a copolymer obtainable by polymerising a dicarboxylic acid ester monomer represented by the general formulas:

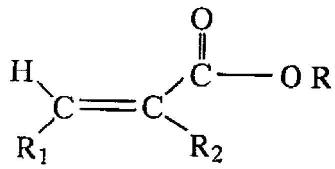

**Formula 1**

wherein R is a $C_6$ to $C_{18}$ straight chain alkyl group, $R_1$ is COOR, and $R_2$ is hydrogen or a $C_1$ to $C_4$ alkyl group, or

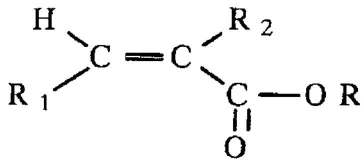

**Formula 2**

wherein R is a $C_6$ to $C_{18}$ straight chain alkyl group, $R_1$ is COOR, and $R_2$ is hydrogen or a $C_1$ to $C_4$ alkyl group, wherein the straight chain alkyl group R in a compound of Formulas 1 and 2 is obtainable by reaction of the corresponding acid precursor of a compound of Formula 1 or 2, where R is H in a compound of Formulas 1 and 2 and $R_1$ and $R_2$ are as defined in a compound of Formulas 1 and 2, and a mixture of alcohols having side chains with an average number of carbons ranging from greater than 8 to less than 12 defined by the following formula:

$$C_n = \frac{\sum_{i=j}^{i=z} X_i Cn_i}{\sum_{i=j}^{i=z} X_i}$$

where $X_i$ is the mole fraction of alcohol (*i*); $C_{ni}$ represents the number of carbon atoms in alcohol (*i*); j is the lowest number of carbons in an alcohol in the copolymer and must be at least 6; and z is the highest number of carbons in an alcohol.

**2.** The power transmission fluid as claimed in claim 1, wherein the copolymer (b) comprises an FVA copolymer.

**3.** The power transmission fluid as claimed in claim 2, wherein the FVA copolymer is 40 to 60 mole percent dialkyl fumarate and 60 to 40 mole percent vinyl acetate.

**4.** The power transmission fluid as claimed in claim 1, wherein the copolymer (b) comprises a MVA copolymer.

**5.** The power transmission fluid as claimed in claim 1, wherein the copolymer (b) includes a spacer monomer selected from the group consisting of dimethyl maleate, 1-hexene and diethyl maleate.

**6.** The power transmission fluid as claimed in claim 2, wherein the FVA copolymer includes an olefin spacer monomer.

**7.** The power transmission fluid as claimed in claim 2, wherein the FVA copolymer includes a polyisoprene-containing spacer monomer.

**8.** The power transmission fluid as claimed in claim 2, wherein the FVA copolymer contains a nitrogen species.

**9.** The power transmission fluid as claimed in claim 8, wherein the nitrogen species is selected from the group consisting of vinyl pyridine, N-vinylimidazole and N-phenyl-1-phenylenediamine.

**10.** The power transmission fluid as claimed in anyone of the preceding claims, wherein the copolymer (b) exhibits a thickening efficiency ("TE") ranging from 0.10 to 1.00.

**11.** The power transmission fluid as claimed in claim 1, wherein the base oil comprises up to 5% of a Group I base stock.

**12.** The power transmission fluid as claimed in claim 1, wherein the base oil 5 comprises a Group II base stock.

**13.** The power transmission fluid as claimed in claim 1, wherein the base oil comprises a Group III base stock.

**14.** The power transmission fluid as claimed in claim 1, wherein the base stock has a viscosity of less than 4.7 centistokes.

**15.** The power transmission fluid as claimed in claim 1 comprising one or more of the following components: detergents, metal rust inhibitors, viscosity index improvers, corrosion inhibitors, oxidation inhibitors, friction modifiers, dispersants, anti-foaming agents and anti-wear agents.

**16.** The power transmission fluid as claimed in claim 16, wherein the antiwear agent is a dihydrocarbyl dithiophosphate metal salt.

**17.** The power transmission fluid as claimed in claim 1 or any one of claims 12 to 17, wherein the fluid exhibits a Brookfield viscosity at -40°C less than or equal to 20,000 cP.

**18.** Use of a copolymer as defined in any one of claims 1 to 11 in a power transmission fluid to provide improved viscometric properties.

**Patentansprüche**

**1.** Kraftübertragungsflüssigkeitszusammensetzung umfassend:

(a) Basisöl, das Basismaterial aus Gruppe II, Basismaterial aus Gruppe III und/oder Basismaterial aus Gruppe IV sowie Mischungen davon umfasst, und
(b) Copolymer, das durch Polymerisieren von Dicarbonsäureestermonomer erhältlich ist, das durch die allgemeinen Formeln:

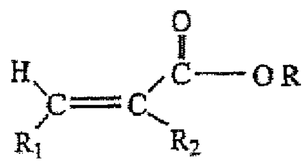

Formel 1,

in der R eine geradkettige $C_6$- bis $C_{18}$-Alkylgruppe ist, $R_1$ COOR ist und $R_2$ Wasserstoff oder eine $C_1$- bis $C_4$-Alkylgruppe ist, oder

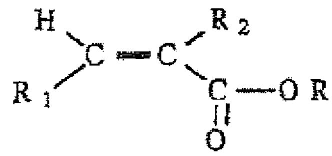

Formel 2

wiedergegeben wird, in der R eine geradkettige $C_6$- bis $C_{18}$-Alkylgruppe ist, $R_1$ COOR ist und $R_2$ Wasserstoff oder eine $C_1$- bis $C_4$-Alkylgruppe ist, wobei die geradkettige Alkylgruppe R in einer Verbindung der Formeln 1 und 2 erhältlich ist durch Umsetzung des entsprechenden Säurevorläufers einer Verbindung der Formel 1 oder 2, wobei R in einer Verbindung der Formeln 1 und 2 H ist und $R_1$ und $R_2$ wie in einer Verbindung der Formeln 1 und 2 definiert sind, und einer Mischung von Alkoholen mit Seitenketten mit einer durchschnittlichen Anzahl von Kohlenstoffen im Bereich von größer als 8 bis weniger als 12, definiert gemäß der folgenden Formel:

$$C_n = \frac{\sum_{i=j}^{i=z} X_i C_{n_i}}{\sum_{i=j}^{i=z} X_i}$$

in der $X_i$ der molare Anteil an Alkohol (i) ist, $C_{ni}$ die Anzahl der Kohlenstoffatome im Alkohol (i) wiedergibt, j die kleinste Anzahl von Kohlenstoffen in einem Alkohol in dem Copolymer ist und mindestens 6 betragen muss, und z die höchste Anzahl an Kohlenstoffen in einem Alkohol ist.

**2.** Kraftübertragungsflüssigkeit wie in Anspruch 1 beansprucht, in der das Copolymer (b) FVA-Copolymer umfasst.

**3.** Kraftübertragungsflüssigkeit wie in Anspruch 2 beansprucht, in der das FVA Copolymer zu 40 bis 60 mol% aus Dialkylfumarat und zu 60 bis 40 mol% aus Vinylacetat besteht.

**4.** Kraftübertragungsflüssigkeit wie in Anspruch 1 beansprucht, in der das Copolymer (b) MVA-Copolymer umfasst.

**5.** Kraftübertragungsflüssigkeit wie in Anspruch 1 beansprucht, in der das Copolymer (b) ein Spacer-Monomer ausgewählt aus der Gruppe bestehend aus Dimethylmaleat, 1-Hexen und Diethylmaleat umfasst.

**6.** Kraftübertragungsflüssigkeit wie in Anspruch 2 beansprucht, in der das FVA-Copolymer ein Olefin-Spacer-Monomer einschließt.

**7.** Kraftübertragungsflüssigkeit wie in Anspruch 2 beansprucht, in der das FVA-Copolymer ein Polyisopren enthaltendes Spacer-Monomer einschließt.

**8.** Kraftübertragungsflüssigkeit wie in Anspruch 2 beansprucht, in der das FVA-Copolymer Stickstoffspezies enthält.

**9.** Kraftübertragungsflüssigkeit wie in Anspruch 8 beansprucht, in der die Stickstoffspezies ausgewählt ist aus der Gruppe bestehend aus Vinylpyridin, N-Vinylimidazol und N-Phenyl-1-phenylendiamin.

**10.** Kraftübertragungsflüssigkeit wie in einem der vorstehenden Ansprüche beansprucht, in der das Copolymer (b) eine Verdickungseffizienz ("TE") im Bereich von 0,10 bis 1,00 aufweist.

**11.** Kraftübertragungsflüssigkeit wie in Anspruch 1 beansprucht, in der das Basisöl bis zu 5% Basismaterial aus Gruppe I umfasst.

**12.** Kraftübertragungsflüssigkeit wie in Anspruch 1 beansprucht, in der das Basisöl Basismaterial aus Gruppe II umfasst.

**13.** Kraftübertragungsflüssigkeit wie in Anspruch 1 beansprucht, in der das Basisöl Basismaterial aus Gruppe III umfasst.

**14.** Kraftübertragungsflüssigkeit wie in Anspruch 1 beansprucht, in der das Basismaterial eine Viskosität von weniger als 4,7 Centistokes aufweist.

**15.** Kraftübertragungsflüssigkeit wie in Anspruch 1 beansprucht, die ein oder mehrere der folgenden Bestandteile umfasst: Detergentien, Metallrostinhibitoren, Viskositätsindexverbesserer, Korrosionsschutzmittel, Oxidationsschutzmittel, Reibungsmodifizierungsmittel, Dispergiermittel, Antischaummittel und Antiverschleißmittel.

**16.** Kraftübertragungsflüssigkeit wie in Anspruch 15 beansprucht, in der das Antiverschleißmittel ein Dikohlenwasserstoffdithiophosphatsalz ist.

**17.** Kraftübertragungsflüssigkeit wie in Anspruch 1 beansprucht oder gemäß einem der Ansprüche 12 bis 17, in der die Flüssigkeit eine Brookfield-Viskosität bei -40°C von weniger als oder gleich 20.000 cP aufweist.

**18.** Verwendung eines Copolymers wie in einem der Ansprüche 1 bis 11 definiert in einer Kraftübertragungsflüssigkeit, um verbesserte viskometrische Eigenschaften zu liefern.

## Revendications

**1.** Composition de fluide de transmission de puissance, comprenant :

(a) une huile de base comprenant une huile lubrifiante de base du Groupe II, une huile lubrifiante de base du Groupe III et/ou une huile lubrifiante de base du Groupe IV ainsi que leurs mélanges ; et
(b) un copolymère pouvant être obtenu par polymérisation d'un monomère ester d'acide dicarboxylique représenté par les formules générales :

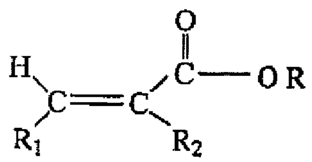

Formule 1

dans laquelle R représente un groupe alkyle en $C_6$ à $C_{18}$ à chaîne droite, $R_1$ représente un groupe COOR et $R_2$ représente un atome d'hydrogène ou un groupe alkyle en $C_1$ à $C_4$, ou

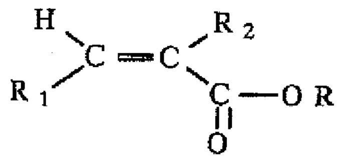

Formule 2

dans laquelle R représente un groupe alkyle en $C_6$ à $C_{18}$ à chaîne droite, $R_1$ représente un groupe COOR et $R_2$ représente un atome d'hydrogène ou un groupe alkyle en $C_1$ à $C_4$, où le groupe alkyle à chaîne droite R dans le composé de formules 1 et 2 peut être obtenu par réaction du précurseur acide correspondant d'un composé de formule 1 ou 2, où R représente H dans un composé de formules 1 et 2 et $R_1$ et $R_2$ sont tels que définis dans un composé de formules 1 et 2, et d'un mélange d'alcools ayant des chaînes latérales ayant un nombre moyen d'atomes de carbone allant de plus de 8 à moins de 12 défini par la formule suivante :

$$C_n = \frac{\sum_{i=j}^{i=z} X_i Cn_i}{\sum_{i=j}^{i=z} X_i}$$

dans laquelle $X_i$ représente la fraction molaire d'alcool (i) ; $C_{ni}$ représente le nombre d'atomes de carbone dans l'alcool (i) ; *j* représente le nombre le plus bas d'atomes de carbone dans un alcool dans le copolymère et doit être égal à au moins 6 ; et z représente le nombre le plus élevé d'atomes de carbone dans un alcool.

**2.** Fluide de transmission de puissance suivant la revendication 1, dans lequel lecopolymère (b) comprend un copolymère FVA.

**3.** Fluide de transmission de puissance suivant la revendication 2, dans lequel le copolymère FVA est constitué de 40 à 60 % en moles d'un fumarate de dialkyle eT de 60 à 40 % en moles d'acétate de vinyle.

**4.** Fluide de transmission de puissance suivant la revendication 1, dans lequel le copolymère (b) comprend un copolymère MVA.

**5.** Fluide de transmission de puissance suivant la revendication 1, dans lequel lecopolymère (b) comprend un monomère intercalaire choisi dans le groupe consistant en le maléate de diméthyle, le 1-hexène et le maléate de diéthyle.

**6.** Fluide de transmission de puissance suivant la revendication 2, dans lequel le copolymère FVA comprend un monomère intercalaire oléfinique.

**7.** Fluide de transmission de puissance suivant la revendication 2, dans lequel le copolymère FVA comprend un monomère intercalaire contenant du polyisoprène.

**8.** Fluide de transmission de puissance suivant la revendication 2, dans lequel le copolymère FVA contient une entité azotée.

**9.** Fluide de transmission de puissance suivant la revendication 8, dans lequel l'entité azotée est choisie dans le groupe consistant en la vinylpyridine, le N-vinylimidazole et la N-phényl-1-phénylènediamine.

**10.** Fluide de transmission de puissance suivant l'une quelconque des revendications précédentes, dans lequel le copolymère (b) présente une efficacité d'épaississement ("TE") allant de 0,10 à 1,00.

**11.** Fluide de transmission de puissance suivant la revendication 1, dans lequel l'huile de base comprend jusqu'à 5 % d'une huile lubrifiante de base du Groupe I.

**12.** Fluide de transmission de puissance suivant la revendication 1, dans lequel l'huile de base comprend une huile lubrifiante de base du Groupe II.

**13.** Fluide de transmission de puissance suivant la revendication 1, dans lequel l'huile de base comprend une huile lubrifiante de base du Groupe III.

**14.** Fluide de transmission de puissance suivant la revendication 1, dans lequel l'huile lubrifiante de base a une viscosité inférieure à 4,7 centistokes.

**15.** Fluide de transmission de puissance suivant la revendication 1, comprenant un ou plusieurs des constituants suivants : des détergents, des inhibiteurs de formation de rouille, des agents améliorant l'indice de viscosité, des inhibiteurs de corrosion, des inhibiteurs d'oxydation, des modificateurs de frottement, des dispersants, des agents antimousse et des agents anti-usure.

**16.** Fluide de transmission de puissance suivant la revendication 16, dans lequel l'agent antimousse est un dihydrocarbyldithiophosphate métallique.

**17.** Fluide de transmission de puissance suivant la revendication 1 ou l'une quelconque des revendications 12 à 17, ledit fluide présentant une viscosité Brookfield à -40°C inférieure ou égale à 20 000 cP.

**18.** Utilisation d'un copolymère tel que défini dans l'une quelconque des revendications 1 à 11 dans un fluide de transmission de puissance pour conférer des propriétés viscosimétriques améliorées.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 7300910 B


### Non-patent literature cited in the description


- Engine Oil Licensing and Certification System. American Petroleum Institute, 01 December 1998